# EUROPÄISCHE PATENTANMELDUNG

(11) **EP 2 048 052 A2**
(43) Veröffentlichungstag der Anmeldung: **15.04.2009**
(21) Anmeldenummer: 08165571.4
(22) Anmeldetag: 01.10.2008
(51) Int. Cl.: B60T 10/02

(54) **Verfahren zur Steuerung einer Rückregelstrategie einer hydrodynamischen Bremse**

(30) Priorität: 10.10.2007 DE 102007048528
(71) Anmelder: ZF Friedrichshafen AG, 88038 Friedrichshafen (DE)
(72) Erfinder: Reisch, Bernhard, 88316 Isny (DE); Schmidtner, Peter, 88131 Lindau (DE)

(57) **Zusammenfassung**

Verfahren zur Steuerung einer Bremsleistung eines Retarders als Funktion einer Temperatur eines Kühlmittels, wobei eine Rückregelung des Retarders einen dynamischen und einen statischen Teil aufweist und die Bremsleistung des Retarders derart geregelt wird, dass vorgegebene zulässige Temperaturen des Kühlmittels nicht überschritten werden, wobei die Maximaltemperatur (M_2, M_3, M_4, M_5) des Kühlmittels während eines Bremsvorgangs ermittelt wird und mit einer vorgegebenen Soll-Maximaltemperatur (M_soll) verglichen wird und bei einer festgestellten Abweichung der dynamische Teil der Rückregelung um einen als Funktion der Abweichung errechneten Betrag verändert wird.

## Beschreibung

Die vorliegende Erfindung betrifft ein Verfahren zur Begrenzung der Bremsleistung eines Retarders eines Kraftfahrzeugs als Funktion der Temperatur des Kühlmittels nach dem Oberbegriff des Anspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle zu verringern oder konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Die während des Bremsvorgangs vom Retarder erzeugte Wärme kann mit Hilfe eines Kühlmediums eines Kühlsystems abgeführt und über einen Kühler eines Kühlsystems an die Umgebung abgegeben werden. Für Fahrzeuge mit Verbrennungsmotor kann als Kühlsystem für den Retarder das Motorkühlsystem des Fahrzeugs herangezogen werden. Hierbei muss dafür Sorge getragen werden, dass das Leistungsvermögen des Kühlsystems nicht überschritten wird, sodass keine Motorschäden wegen Überhitzung auftreten.

Eine Möglichkeit, eine Überhitzung des Motorkühlsystems zu verhindern, besteht darin, die Temperatur im Kühlsystem ständig zu überwachen und bei Überschreiten einer vorgegebenen Temperatur das Bremsmoment des Retarders zu begrenzen bzw. zu regeln. Im Falle eines hydrodynamischen Retarders kann dies durch einen Sensor erfolgen, der die Temperatur des Kühlmediums des Kühlsystems ständig misst, wobei die elektronische Steuerung automatisch das Bremsmoment reduziert, so dass ein vorgegebener Maximalwert nicht überschritten wird.

Ein Verfahren zur geregelten Begrenzung der Bremswirkung eines Retarders ist aus der DE 197 16 922 C2 bekannt. Bei diesem bekannten Regelverfahren wird die während des Bremsens erzeugte Wärme mit Hilfe des Kühlmittels des Kühlsystems abgeführt, wobei die Begrenzung der Bremswirkung nach Erreichen einer vorbestimmten Temperatur einsetzt; diese vorbestimmte Temperatur wird in Abhängigkeit vom zeitlichen Temperaturverlauf des Kühlmediums und/oder des Arbeitsmediums des Retarders gewählt als Funktion des Temperaturgradienten, der als Maß für das Einsetzen der Regelung herangezogen wird. Bei diesem Verfahren wird also die Temperatur, bei der die Regelung einsetzt, in Abhängigkeit vom Temperaturgradienten gesetzt, um so die Trägheit des Kühlsystems bei Einsetzen der Regelung berücksichtigen zu können. Damit wird erreicht, dass bei steil ansteigendem Temperaturverlauf die Regelung bei niedrigeren Temperaturwerten als bei nur langsam ansteigender Temperatur einsetzen muss. Mit diesem bekannten Verfahren wird die Rückregelkurve verändert, wodurch sich ein anderer Rückregelbeginn ergibt. Nachteilig bei diesem Verfahren ist, dass bei einem Anstieg der Kühlmittelstemperatur, welche schneller ist, als sie der Temperatursensor aufgrund seiner Trägheit erfassen kann, ein falsch berechneter Temperaturgradient ermittelt wird.

Ein Verlauf der Kühlmitteltemperatur eines Kühlsystems kann in zwei Teile eingeteilt werden, einen dynamischen Teil, bei welchem die Kühlmitteltemperatur sich verändert und einen statischen Teil, bei welchem die Kühlmitteltemperatur eine Beharrungstemperatur aufweist. In der DE 100 36 517 A1 wird ein Verfahren vorgestellt, in welchem eine Regelung durchgeführt wird, um eine Abweichung einer aktuellen Beharrungstemperatur von einer Soll-Beharrungstemperatur auszugleichen. Ein so genannter Überschwinger über die Soll-Beharrungstemperatur weist eine Maximaltemperatur höher als die Soll-Beharrungstemperatur auf und kann während kurzer Zeiten erlaubt sein, so lange eine Soll-Maximaltemperatur nicht überschritten wird. Da das genannte Verfahren erst greift wenn die Beharrungstemperatur erreicht ist, wird nicht verhindert, dass eine zu hohe Maximaltemperatur entsteht.

Aufgabe der vorliegenden Erfindung ist es, ein Verfahren zu einer genauen Regelung der Bremsleistung eines Retarders einer Bremsanlage für ein Kraftfahrzeug in Abhängigkeit von der Kühlmitteltemperatur vorzuschlagen.

Ausgehend von einem Verfahren der eingangs näher genannten Art erfolgt die Lösung dieser Aufgabe mit den Merkmalen des Anspruchs 1, vorteilhafte Ausgestaltungen sind in den Unteransprüchen beschrieben.

Erfindungsgemäß wird ein Verfahren vorgeschlagen, welches während eines Bremsvorgangs des Retarders die Maximaltemperatur ermittelt. Die ermittelte Maximaltemperatur wird mit einer vorgegebenen Soll-Maximaltemperatur verglichen. Bei einem Feststellen einer Abweichung der Maximaltemperatur von der Soll-Maximaltemperatur, wird der dynamische Teil der Rückregelung um einen als Funktion der Abweichung errechneten Betrag verändert. Dadurch wird verhindert, dass ein Temperatur-Überschwingen mit einer Maximaltemperatur höher als die Soll-Maximaltemperatur entsteht.

Bei einer ermittelten höheren Maximaltemperatur als die Soll-Maximaltemperatur, wird eine früher einsetzende und/oder stärkere Begrenzung der Bremsleistung vorgegeben. Das heißt, je mehr die ermittelte Maximaltemperatur von der vorgegebenen Soll-Maximaltemperatur nach oben abweicht, desto mehr wird im dynamischen Teil der Rückregelung durch früher einsetzende und/oder stärkere Begrenzung der Bremsleistung eingegriffen. Damit wird sich die ermittelte Maximaltemperatur der Soll-Maximaltemperatur nähern.

Bei einer ermittelten niedrigeren Maximaltemperatur als die Soll-Maximaltemperatur, wird eine später einsetzende und/oder eine schwächere Begrenzung der Bremsleistung des Kühlsystems vorgegeben. Das heißt, je mehr die ermittelte Maximaltemperatur von der Soll-Maximaltemperatur nach unten abweicht, desto weniger wird im dynamischen Teil der Rückregelung durch später einsetzende und/oder schwächere Begrenzung der Bremsleistung eingegriffen. Damit wird sich die ermittelte Maximaltemperatur der Soll-Maximaltemperatur nähern.

In einer Variante des Verfahrens wird bei Auftreten und Feststellen einer Beharrungstemperatur diese zusätzlich zu der Maximaltemperatur ermittelt. Die Beharrungstemperatur wird mit einer Soll-Beharrungstemperatur verglichen und beim Feststellen einer Abweichung zwischen der ermittelten Beharrungstemperatur und der Soll-Beharrungstemperatur wird der statische Teil der Rückregelung um einen als Funktion der Abweichung errechneten Betrag verändert.

Bei einer ermittelten Abweichung der Beharrungstemperatur nach oben von der Soll-Beharrungstemperatur wird die maximal zulässige Bremsleistung im statischen Teil der Rückregelung reduziert. Das heißt, je größer die Abweichung nach oben ist, desto mehr wird im statischen Teil der Rückregelung, durch Reduzierung der maximal zulässigen Bremsleistung, eingegriffen.

In einer weiteren Variante des Verfahren wird bei einem Feststellen, dass ein Überschwingen nicht vorkommt und damit die Maximaltemperatur gleich mit der Beharrungstemperatur ist, eine später einsetzende und/oder geringere Begrenzung der Bremsleistung im dynamischen Teil der Rückregelung bestimmt. Eine zu niedrige Beharrungstemperatur und/oder je später die Maximaltemperatur bzw. Beharrungstemperatur eintrifft, desto weniger wird in der Rückregelung, durch eine später einsetzende und/oder geringere Begrenzung der Bremsleistung im dynamischen Teil der Rückregelung, eingegriffen.

Um ein sicheres Ergebnis zu bekommen werden die Funktionen zur Bestimmung einer Veränderung der Bremsleistung nach zusätzlich mindestens eine der nachfolgenden Größen ermittelt: der Umgebungstemperatur, der Gehäusetemperatur, der Stellung des Thermostats im Kühlkreislauf, des Druckes im Kühlkreislauf, der Fahrzeuggeschwindigkeit, der Hinterachsübersetzung, der kapazitiven Energieaufnahme der gesamten Kühlanlage, der Gangstellung, des Kupplungszustandes, der Lüfterdrehzahl, der Wasserpumpendrehzahl sowie der Motordrehzahl.

Jede Abweichung der ermittelten Temperaturen wird gespeichert und benutzt, um einen Durchschnittswert der jeweiligen Abweichungen zu berechnen. Der Durchschnittswert wird benutzt als Input in den Funktionen zur Bestimmung einer Veränderung des dynamischen bzw. statischen Teils der Rückregelung. Damit werden Daten von mehreren der vergangenen Messungen des Temperaturverlaufs des Kühlmittels benutzt, um ein sicheres Ergebnis der Rückregelung zu bekommen.

Alternativerweise wird die Temperatur des Kühlmittels kontinuierlich gemessen, so dass ein ganzer Temperaturverlauf des Kühlmittels während einer Retarderbremsung ermittelt und abgespeichert wird. Eine Rückregelung wird dann ausgeführt in Analogie mit dem vorher beschriebenen Verfahren, wobei der ganze Temperaturverlauf zu Grunde liegt für die Rückregelungsstrategie und nicht nur die Maximal- bzw. Beharrungstemperatur.

In dem vorgestellten Verfahren kann eine Veränderung der Rückregelung unmittelbar oder erst bei einer Folgebremsung durchgeführt werden. Als Grundlage der Veränderung kann entweder die letzte Bremsung oder ein Durchschnittswert von mehreren vorherigen Bremsungen benutzt werden.

Durch das erfindungsgemäße Verfahren wird eine sichere und genaue Rückregelung der Retarderbremsung ausgeführt. Des Weiteren wird eine Berücksichtigung von der ganzen Temperaturkennlinie des Kühlsystems ermöglicht, wodurch die reale Temperaturkennlinie des Kühlsystems der Soll-Temperaturkennlinie folgen wird.

Weitere Varianten und vorteilhafte Weiterbildungen der Erfindung werden anhand der Zeichnung und der Ausführungsbeispiele beschrieben. Es zeigen:
Fig. 1 ein zu großes Überschwingen über die Soll-Temperaturkennlinie,
Fig. 2 ein zu kleines Überschwingen,
Fig. 3 eine zu hohe Beharrungstemperatur und
Fig. 4 eine zu spät erreichte Beharrungstemperatur.

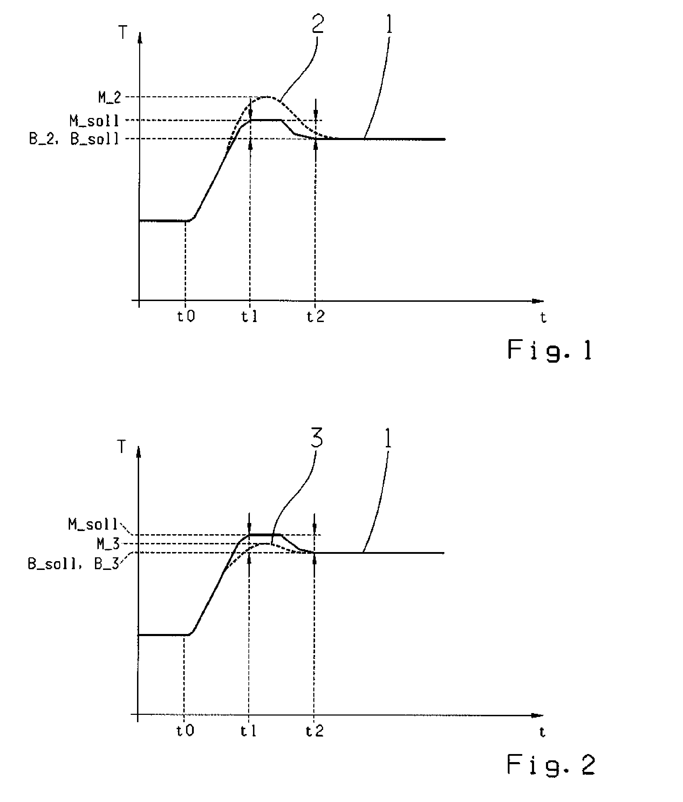

In Fig. 1 bis 4 ist eine Soll-Temperaturkennlinie 1 eines Kühlsystems aufgezeichnet. Die Soll-Temperaturkennlinie 1 zeigt den idealen Temperaturverlauf während einer Bremsung eines Retarders. In einem Idealfall wird die Bremsleistung des Retarders derart geregelt, dass die Temperatur des Kühlmittels der Soll-Temperaturkennlinie folgt. Die Soll-Temperaturkennlinie bzw. die Rückregelung hat einen dynamischen Teil und einen statischen Teil, wobei der dynamische Teil der Soll-Temperaturkennlinie zwischen den Zeitpunkten t_0 und t_2 definiert ist und der statische Teil ab dem Zeitpunkt t_2 definiert ist. Die Soll-Temperaturkennlinie 1 weist ein Überschwingen auf, welches der Teil der Soll-Temperaturkennlinie 1 ist, der über der Soll-Beharrungstemperatur B_soll liegt. Das Maximum der Soll-Temperaturkennlinie ist die Soll-Maximaltemperatur M_soll und trifft bei t_1 ein und die Soll-Beharrungstemperatur B_soll trifft bei t_2 ein.

In Fig. 1 ist eine ermittelte Temperaturkennlinie 2 gezeigt, deren Maximaltemperatur M_2 über der Soll-Maximaltemperatur M_soll liegt. Da das Überschwingen der Temperaturkennlinie 2 über der Soll-Temperaturkennlinie 1 liegt, wird der dynamische Teil der Rückregelung derart justiert, dass die Rückregelung früher und/oder stärker einsetzt.

In Fig. 2 ist eine ermittelte Temperaturkennlinie 3 gezeigt, deren Maximaltemperatur M_3 unter der Soll-Maximaltemperatur M_soll liegt. Da das Überschwingen der Temperaturkennlinie 3 unter der Soll-Kennlinie 1 liegt, wird der dynamsiche Teil der Rückregelung derart justiert, dass die Rückregelung später und/oder schwächer einsetzt.

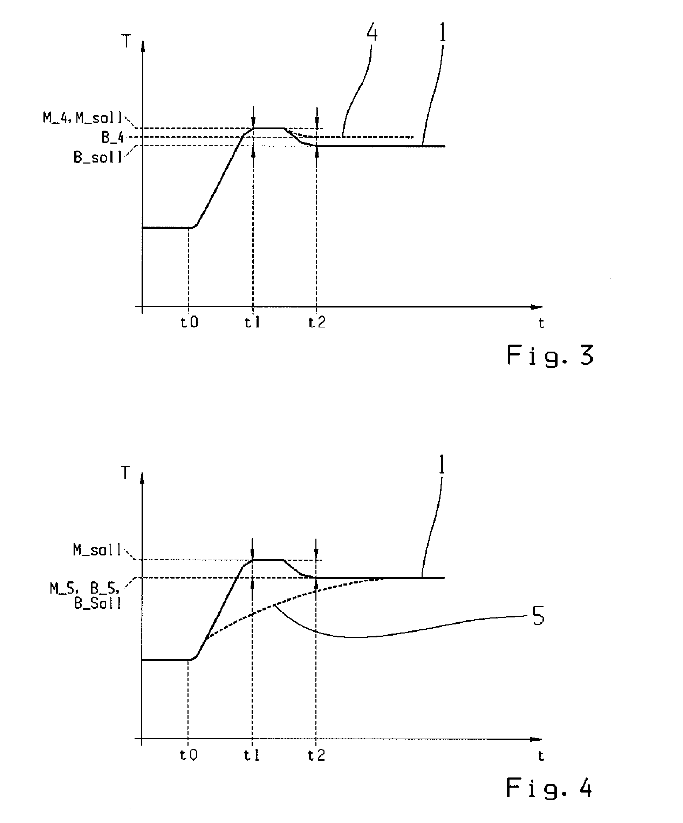

In Fig. 3 ist eine ermittelte Temperaturkennlinie 4 gezeigt, deren Maximaltemperatur M_4 gleich mit der Soll-Maximaltemperatur M_soll liegt, aber deren Beharrungstemperatur B_4 über der Soll-Beharrungstemperatur B_soll liegt. Je mehr die Beharrungstemperatur B_4 von der Soll-Beharrungstemperatur B_soll nach oben abweicht, desto mehr muss im statischen Teil ab der Rückregelung durch Reduzierung der maximal zulässigen Bremsleistung des Retarders eingegriffen werden.

In Fig. 4 ist eine ermittelte Kennlinie 5 gezeigt, deren Maximaltemperatur M_5 spät eintrifft und gleich mit der Beharrungstemperatur B_5 bzw. B_soll liegt. Je später die Maximaltemperatur M_5 eintritt, desto mehr wird im dynamischen Teil der Rückregelung durch spätere und geringere Begrenzung der Bremsleistung eingegriffen.

Die ermittelte Temperaturkennlinien 2, 3, 4, 5 kann entweder eine Einzelaufnahme oder ein Durchschnitt von den Temperaturkennlinien der letzten Bremsungen des Retarders sein.

### Bezugszeichen

- 1: Soll-Temperaturkennlinie
- 2: Temperaturkennlinie mit zu hoher Maximaltemperatur
- 3: Temperaturkennlinie mit zu niedriger Maximaltemperatur
- 4: Temperaturkennlinie mit zu hoher Beharrungstemperatur
- 5: Temperaturkennlinie mit zu spät eingetroffener Maximaltemperatur
- M_soll: Soll-Maximaltemperatur
- B_soll: Soll-Beharrungstemperatur
- M_x: Maximaltemperatur der jeweiligen Temperaturkennlinie
- B_x: Beharrungstemperatur der jeweiligen Temperaturkennlinie
- t_0: Zeitpunkt für den Start der Retarderbremsung
- t_1: Zeitpunkt für Eintreffen der Maximaltemperatur
- t_2: Zeitpunkt für Eintreffen der Beharrungstemperatur

## Patentansprüche

1. Verfahren zur Steuerung einer Bremsleistung eines Retarders als Funktion einer Temperatur eines Kühlmittels, wobei eine Rückregelung des Retarders einen dynamischen und einen statischen Teil aufweist und die Bremsleistung des Retarders derart geregelt wird, dass vorgegebene zulässige Temperaturen des Kühlmittels nicht überschritten werden, **dadurch gekenn zeichnet** , dass die Maximaltemperatur (M_2, M_3, M_4, M_5) des Kühlmittels während eines Bremsvorgangs ermittelt wird und mit einer vorgegebenen Soll-Maximaltemperatur (M_soll) verglichen wird und bei einer festgestellten Abweichung der dynamische Teil der Rückregelung um einen als Funktion der Abweichung errechneten Betrag verändert wird.

2. Verfahren nach Anspruch 1, **dadurch gekennzeichnet, dass** eine früher einsetzende und/oder eine stärkere Begrenzung der Bremsleistung durch eine Abweichung der Maximaltemperatur (M_2, M_3, M_4, M_5) nach oben von der vorgegebenen Soll-Maximaltemperatur bestimmt wird.

3. Verfahren nach Anspruch 1 oder 2, **dadurch gekennzeichnet, dass** eine später einsetzende und/oder eine schwächere Begrenzung der Bremsleistung durch eine Abweichung der Maximaltemperatur (M_2, M_3, M_4, M_5)nach unten von der vorgegebenen Soll-Maximaltemperatur (M_soll) bestimmt wird.

4. Verfahren nach Anspruch 1, 2 oder 3, **dadurch gekennzeichnet, dass,** bei Auftreten und Feststellen einer Beharrungstemperatur (B_2, B_3, B_4, B_5) des Kühlmittels, diese ermittelt und mit einer vorgegebenen Soll-Beharrungstemperatur (B_soll) verglichen wird und, bei einer festgestellten Abweichung, der statische Teil der Rückregelung um einen als Funktion der Abweichung errechneten Betrag verändert wird.

5. Verfahren nach Anspruch 4, **dadurch gekennzeichnet, dass** eine Reduzierung der maximal zulässigen Bremsleistung durch Abweichung der Beharrungstemperatur (B_2, B_3, B_4, B_5) nach oben von der Soll-Beharrungstemperatur (B_soll) bestimmt wird und dass größere Abweichungen nach oben eine größere Reduzierung der maximal zulässigen Bremsleistung in dem statischen Teil der Rückregelung bewirken.

6. Verfahren nach Anspruch 4 oder 5, **dadurch gekennzeichnet, dass** eine später einsetzende und geringere Begrenzung der Bremsleistung im dynamischen Teil der Rückregelung durch eine spät eingetroffene Maximaltemperatur (M_2, M_3, M_4, M_5) bestimmt wird.

7. Verfahren nach einem der vorhergehenden Ansprüche, **dadurch gekennzeichnet, dass** die Funktionen zur Bestimmung einer Veränderung der Bremsleistung nach zusätzlich mindestens einer der nachfolgenden Größen ermittelt wird: der Umgebungstemperatur, der Gehäusetemperatur, der Stellung des Thermostats im Kühlkreislauf, des Druckes im Kühlkreislauf, der Fahrzeugsgeschwindigkeit, der Hinterachsübersetzung, der kapazitiven Energieaufnahme der gesamten Kühlanlage, der Gangstellung, des Kupplungszustandes, der Lüfterdrehzahl, der Wasserpumpendrehzahl sowie der Motordrehzahl.

8. Verfahren nach einem der vorhergehenden Ansprüche, **dadurch gekennzeichnet, dass** die Funktionen zur Bestimmung einer Veränderung der Bremsleistung von einem Durchschnittswert der jeweiligen Abweichungen mehrerer vergangener Bremsungen bestimmt wird.

9. Verfahren nach einem der vorherigen Ansprüche, **dadurch gekennzeichnet, dass** die Temperatur des Kühlmittels kontinuierlich während des Bremsvorgangs ermittelt und abgespeichert wird.

10. Verfahren nach einem der vorhergehenden Ansprüche, **dadurch gekennzeichnet, dass** eine Veränderung der jeweiligen Funktionen entweder unmittelbar oder erst bei einer Folgebremsung durchgeführt werden.
